(19) Europäisches Patentamt
European Patent Office
Office européen des brevets

(11) **EP 4 679 341 A1**

(12) **EUROPEAN PATENT APPLICATION**
published in accordance with Art. 153(4) EPC

(43) Date of publication:
**14.01.2026 Bulletin 2026/03**

(21) Application number: **24918930.9**

(22) Date of filing: **05.09.2024**

(51) International Patent Classification (IPC):
*G06Q 10/06* (2023.01)  *G06Q 10/04* (2023.01)
*G06Q 10/10* (2023.01)  *G06Q 10/08* (2024.01)
*G06Q 10/30* (2023.01)  *G06N 20/00* (2019.01)
*G06N 3/092* (2023.01)  *C10G 35/00* (2006.01)

(52) Cooperative Patent Classification (CPC):
C10G 35/00; G06N 3/092; G06N 20/00;
G06Q 10/04; G06Q 10/06; G06Q 10/08;
G06Q 10/10; G06Q 10/30

(86) International application number:
**PCT/KR2024/013412**

(87) International publication number:
**WO 2025/154896 (24.07.2025 Gazette 2025/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.01.2024  KR 20240008196
05.03.2024  KR 20240031541**

(71) Applicant: **LG Management Development Institute
Co., Ltd.
Seoul 07336 (KR)**

(72) Inventors:
• **HONG, Sunghoon**
  **Seoul 08000 (KR)**
• **YOON, Deunsol**
  **Seoul 06587 (KR)**
• **JUNG, Whiyoung**
  **Seoul 05652 (KR)**
• **LEE, Kanghoon**
  **Seoul 03504 (KR)**
• **LIM, Woohyung**
  **Seoul 06004 (KR)**

(74) Representative: **BCKIP Part mbB
MK1
Landsbergerstraße 98, 3.Stock
80339 München (DE)**

(54) **SCHEDULING OPTIMIZATION METHOD AND APPARATUS USING REINFORCEMENT LEARNING**

(57)    A method for scheduling a naphtha cracking center by at least one processor includes: obtaining input information; determining incoming tank information using a first agent based on the input information; determining mixing tank combination information using a second agent; and determining cracking furnace operation information using a third agent.

FIG. 2

EP 4 679 341 A1

**Description**

[Technical Field]

The present disclosure relates to a method and apparatus for performing optimized scheduling using reinforcement learning.

[Background of the Invention]

Reinforcement learning is an area of machine learning and means a method in which a subject defined in an environment recognizes the current status and selects an action or action sequence that maximizes reward among selectable actions. Since reinforcement learning is a solution way that may be applied universally, it is being studied in various fields, and is particularly widely used in the field of manufacturing system scheduling.

There is an optimization study using mixed-integer linear programming as a type of mathematical optimization technique (Mathematical Programming) related to manufacturing system scheduling, but it is not applied and used in reality due to various and mathematically difficult to define production constraints in factory sites. This disclosure is intended to solve these problems.

[Prior Art Documents]

[Patent Documents]

(Patent Document 0001) Korean Registered Patent Publication No. 10-2181879 (2020.11.23)

[Description of the Invention]

[Problem to be Solved]

The present disclosure provides a method and apparatus for performing optimized scheduling through reinforcement learning using multi-agents.

[Means for Solving the Problem]

An embodiment of the present disclosure may provide a method and apparatus for performing optimized scheduling using reinforcement learning.

An embodiment of the present disclosure provides a method for scheduling a naphtha cracking center by at least one processor, include: obtaining input information; determining incoming tank information using a first agent based on the input information; determining mixing tank combination information using a second agent; and determining cracking furnace operation information using a third agent, wherein at least one of the first agent, the second agent, and the third agent is learned by reinforcement learning.

In an embodiment, the first agent, the second agent, and the third agent may be asynchronous multi-agents.

In an embodiment, the input information may include at least one of constraints, naphtha incoming schedule information, tank inventory information, naphtha property information in the tanks, mixing tank operation information, cracking furnace operation plan information, target production quantity information for specific products, raw material unit price information, and product unit price information.

In an embodiment, the method may include generating one or more scheduling information for the naphtha cracking center based on the incoming tank information, the mixing tank combination information, and the cracking furnace operation information.

In an embodiment, the input information may be obtained through a first user interface (UI), and the scheduling information may be provided to the user through a second UI.

In an embodiment, the scheduling information may include at least one of incoming scheduling information, mixing scheduling information, cracking furnace scheduling information, expected production quantity information, expected earnings information, expected naphtha inventory information, expected property information, constraints satisfaction test results, and a scheduling graph.

In an embodiment, the incoming tank information may include at least one of an identifier of at least one incoming tank for storing naphtha among a plurality of incoming tanks, naphtha incoming ratio information for each of the at least one incoming tank, and naphtha incoming schedule information for each of the at least one incoming tank.

In an embodiment, the mixing tank combination information may include determining at least one of: an identifier of at least one incoming tank from among a plurality of incoming tanks from which naphtha is transferred to the mixing tank, information on the ratio of naphtha to be transferred to the mixing tank for each of identifier of the at least one incoming tanks, information on the mixing schedule with the mixing tank for each of the at least one incoming tanks, information on the ratio of naphtha mixing for each of the at least one incoming tanks, and information on the blending performance date.

In an embodiment, the cracking furnace operation information may include at least one of: cracking furnace mode information, cracking furnace identifier, input rate, coil outlet temperature (COT), dilution steam ratio (DSR), heating time, and cracking furnace operation schedule information.

In an embodiment, at least one of the first agent, second agent, and third agent may be a plurality.

In an embodiment, the first agent, second agent, and third agent may be learned using the same reward in reinforcement learning.

In an embodiment, the reward in the reinforcement learning may be determined based on total earnings, facility operation costs, naphtha purchase costs, and costs associated with constraints.

In an embodiment, the reward in the reinforcement learning is determined by the following:

$$Reward = Profit - \sum_{c \in Constraints} w_c \cdot Cost_c,$$

$$Profit = Revenue - Energy\ usage - Naphtha\ cost$$

wherein the profit may be determined based on subtracting facility operation costs and naphtha purchase costs from the total earnings, $w_c$ may be the weight per each constraint and $Cost_c$ may be the cost per each constraint.

An embodiment of the present disclosure includes one or more processors; and one or more memory having stored therein computer-readable instruction configured to cause one or more processors to perform the method according to the present disclosure.

An embodiment of the present disclosure includes a program stored on a computer-readable recording medium that causes a computer to execute the method according to the present disclosure.

An embodiment of the present disclosure includes a computer-readable recording medium having recorded thereon a program for executing a method according to an embodiment of the present disclosure on a computer.

An embodiment of the present disclosure includes a computer-readable recording medium having recorded thereon a database used in an embodiment of the present disclosure.

[Effects of the Invention]

According to the present disclosure, optimized scheduling may be enabled in various facilities such as naphtha cracking centers.

[Brief Description of the Drawings]

FIG. 1 is a schematic diagram of a product production process of a naphtha cracking center according to an embodiment of the present disclosure.

FIG. 2 is a diagram showing a reinforcement learning method using multi-agents according to an embodiment of the present disclosure.

FIG. 3A and FIG. 3B are diagrams showing a reinforcement learning method using multi-agents according to an embodiment of the present disclosure.

FIG. 4 is a flowchart showing a method for generating scheduling information according to an embodiment of the present disclosure.

FIG. 5 is a diagram showing an effect according to an embodiment of the present disclosure.

FIG. 6 is a block diagram of a system according to an embodiment of the present disclosure.

[Detailed Description of the Invention]

In order to clarify the technical idea of the present disclosure, the embodiments of the present disclosure will be described in detail with reference to the accompanying drawings. In describing the present disclosure, if it is determined that a specific description of a related known function or component may unnecessarily obscure the gist of the present disclosure, the detailed description will be omitted. In the drawings, components having substantially the same functional configuration are given the same reference numbers and symbols as possible even if they are shown in different drawings. For convenience of explanation, the apparatus and method are described together when necessary. Each operation of the present disclosure does not necessarily have to be performed in the order described, and may be performed in parallel, selectively, or individually.

The terms used in the embodiments of the present disclosure were selected as general terms widely used at present as possible while considering the functions of the present disclosure, but this may vary depending on the intention of a technician working in the relevant field, precedents, the emergence of new technologies, etc. In addition, in certain cases, there are terms arbitrarily selected by the applicant, and in this case, the meanings thereof will be described in detail in the description of the relevant embodiments. Therefore, the terms used in this specification should be defined based on the meanings of the terms and the overall contents of the present disclosure, rather than simply the names of the terms.

Throughout this disclosure, singular expressions may include plural expressions unless the context clearly indicates otherwise. It should be understood that terms such as "include" or "have" are intended to specify the presence of a feature, number, step, operation, component, part, or combination thereof, but do not preclude the possibility of the presence or addition of one or more other features, numbers, steps, operations, components, parts, or combinations thereof. In other words, when a part throughout this disclosure is said to "include" a component, this does not mean that other components are excluded, but rather that other components may be included, unless otherwise specifically stated.

Expressions such as "at least one" modify the list of elements as a whole, and do not modify the elements of that list individually. For example, "at least one of A, B, and C" and "at least one of A, B, or C" refer to only A, only B, only C, both A and B, both B and C, both A and C, all of A, B, and C, or any combination thereof.

In addition, terms such as "... unit," "... module," etc., described in the present disclosure mean a unit that processes at least one function or operation, which may be implemented by hardware or software, or by a combination of hardware and software.

Throughout this disclosure, when a part is said to be "connected" to another part, this includes not only cases where it is "directly connected" but also cases where it is "electrically connected" with another element in between. Also, when a part is said to "include" a component, this does not mean that it excludes other components, but rather that it may include other components, unless otherwise specifically stated.

The expression "configured to" as used throughout this disclosure may be used interchangeably with, for example, "suitable for," "having the capacity to," "designed to," "adapted to," "made to," or "capable of." The term "configured to" does not necessarily mean something that is "specifically designed to" in terms of hardware. Instead, in some contexts, the expression "system configured to" may mean that the system is "capable of" doing something in conjunction with other apparatuses or components. For example, the phrase "a processor configured (or set) to perform A, B, and C" may mean a dedicated processor (e.g., an embedded processor) to perform those operations, or a generic-purpose processor (e.g., a CPU or application processor) that may perform those operations by executing one or more software programs stored in memory.

The present disclosure aims to provide a method for performing optimized scheduling using reinforcement learning. For convenience of explanation, a method for performing scheduling of a naphtha cracking center will be described as an example. However, the embodiments of the present disclosure are not limited to the naphtha cracking center, and may of course be applied to optimized scheduling of other facilities. Throughout the present disclosure, naphtha may also be referred to as naphtha.

At the naphtha cracking center (NCC), naphtha, a gasoline fraction obtained from a crude oil atmospheric distillation unit, is thermally cracked in a high-temperature cracking furnace, and then through processes such as rapid cooling, compression, and refining, ethylene, propylene, butylene, and BTX (Benzene, Toluene, and Xylene), which are basic raw materials for petrochemical products, may be produced.

That is, naphtha is converted into industrially useful substances such as ethylene, propylene, benzene, toluene, and xylene through steam cracking or thermal cracking. For example, ethylene may be used as a raw material to make polyethylene and polystyrene, propylene may be used to make polypropylene, and butane or butylene may be used to make synthetic rubber. These substances may be used as raw materials for the plastic processing industry, textile industry, rubber industry, paint industry, and detergent industry, and these raw materials may be transformed into final products such as daily necessities, adhesives, dyes, pesticides, pharmaceuticals, industrial products, and interior materials.

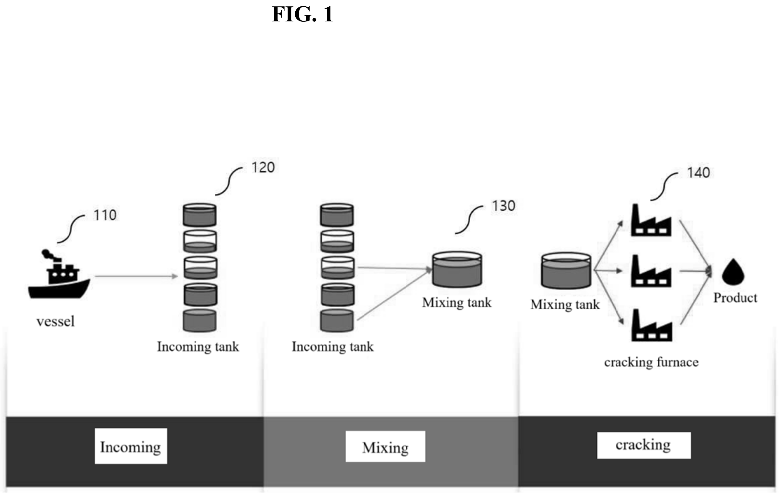

FIG. 1 is a schematic diagram of a product production process of a naphtha cracking center according to an embodiment of the present disclosure.

Referring to Figure 1, the naphtha cracking center is a core facility that produces petrochemical raw materials through a complex process, and is composed of an incoming stage for unloading naphtha, a mixing stage for mixing naphtha, and a cracking stage for producing marketable products. More specifically, the naphtha cracking center is initially transported from geographically distributed oil refineries by ships, etc., unloaded into incoming tanks, and various naphthas from various incoming tanks are supplied to mixing tanks, and the mixed naphtha in the mixing tank is heated in a cracking furnace to produce marketable products of the desired quality. That is, the product production process of the naphtha cracking center may include an incoming process in which naphtha supplied from one or more vessels 110 or companies (e.g., other oil refineries) is stored in one or more incoming tanks 120, a mixing process in which naphtha in the incoming tanks 120 is transferred to a mixing tank 130 for a naphtha cracking process, and a cracking process in which naphtha supplied from the mixing tank 130 is thermally cracked at high temperature in a cracking furnace 140. Here, the mixing tank 130 may also be referred to as a mixing tank or a feed tank.

In an embodiment, the product production process of the naphtha cracking center may further include a process of measuring the paraffin content of naphtha supplied from a vessel 110 or a company, and a process of measuring the paraffin content of naphtha stored in an incoming tank 120, a mixing tank 120, etc.

In an embodiment, the constraints may include a range for the paraffin content for each tank. For example, the paraffin content of the mixing tank 130 may need to be limited to a range of about 80 to 83% based on the total weight of the naphtha. Since naphtha has different properties depending on the origin or company, the naphtha stored in the incoming tank also has different properties, and the incoming process and the mixing process must be performed so that the paraffin content of the mixing tank 130 satisfies the range of the constraints.

Considering these constraints, it is important to create an optimal schedule for the naphtha cracking center for profitability and efficiency, but, currently experts decide which incoming tank to store naphtha in, what ratio to mix the naphtha in the incoming tank with the mixing tank, and how much to heat it through which cracker based on their experience and know-how. This has limitations in predicting complex chemical reactions and actual results, there is large variation depending on the level of experience and know-how of the expert, it is difficult to verify whether all constraints have been satisfied, and it is difficult to respond to sudden changes in situations.

Accordingly, the present disclosure seeks to provide a method for determining optimal scheduling using artificial intelligence. That is, the present disclosure seeks to provide a method for autonomously operating a naphtha cracking center using multi-agent reinforcement learning in which each agent takes responsibility for each step and cooperates to achieve a common goal while overcoming the constraints of the real world. The artificial intelligence-related function according to the present disclosure operates through a processor and a memory. The processor may be composed of one or more processors. At this time, one or more processors may be a general-purpose processor such as a CPU, an AP, a DSP (digital signal processor), a graphics-only processor such as a GPU, a VPU (vision processing unit), or an artificial intelligence-only processor such as an NPU. One or more processors control input data to be processed according to a predefined operation rule or artificial intelligence model stored in the memory. Or, when one or more processors are artificial intelligence-only processors, the artificial intelligence-only processor may be designed with a hardware structure specialized for processing a specific artificial intelligence model.

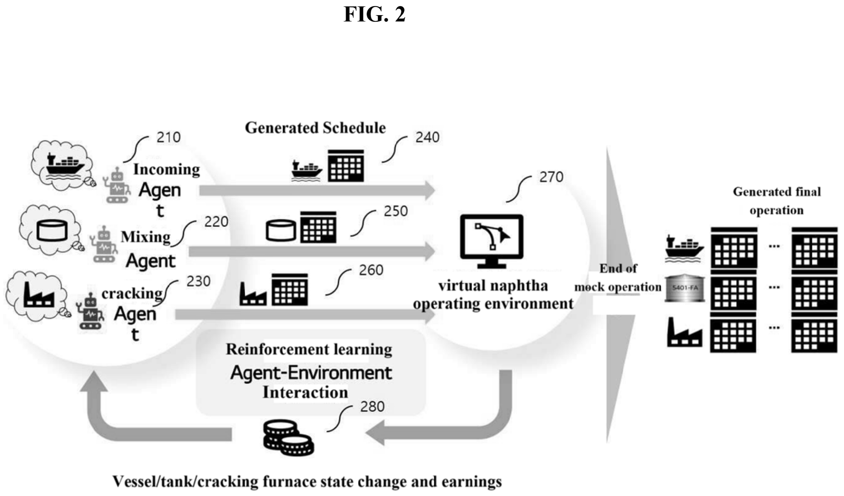

FIG. 2 is a diagram illustrating a reinforcement learning method using multi-agents according to an embodiment of the present disclosure.

Referring to FIG. 2, the naphtha cracking center may be operated according to an optimal schedule using scheduling information determined through reinforcement learning using multi-agents 210, 220, 230. A simulator using reinforcement learning may take actions 240, 250, 260 from agents 210, 220, 230 and provide the next observation and reward 280 based on the current actions. In an embodiment, each agent is in charge of a specific process and may cooperate with each other to achieve a goal such as profit maximization while complying with realistic constraints. For example, realistic constraints may exist such as performing the transfer process from the incoming tank to the mixing tank for at least 8 hours while not exceeding the minimum naphtha storage capacity of the incoming tank and the maximum naphtha storage capacity of the mixing tank.

In an embodiment, each agent may determine the information necessary to generate scheduling information for a naphtha cracking center for a predetermined period of time in the future based on current information such as inventory state of each tank, vessel arrival schedule, naphtha supply schedule from other companies, prices of naphtha and marketable products, etc., and various constraints.

In an embodiment, each of the multi-agents may produce different results (e.g., durations) at different times. For example, a first agent 210 may be an agent that manages incoming, and may determine actions such as selecting an incoming tank to store naphtha when ships arrive irregularly, and determining an amount to store in that incoming tank; a second agent 220 may be an agent that blends naphtha, and may determine actions such as determining an incoming tank to bring naphtha to a mixing tank when the level of an incoming tank reaches a threshold (e.g., 90% of tank capacity), and determining an amount to bring from that incoming tank. In addition, a third agent 230 may be an agent that manages a cracking furnace, and may determine actions such as determining variables for incoming naphtha from a mixing tank and operating a cracking furnace when the inventory of the product is below a predetermined amount. With these actions 240, 250, 260 determined at different times, a virtual naphtha operating environment 270 may be created. The simulation apparatus may determine the expected earnings in the virtual naphtha operating environment 270 and determine the reward 280 based on this. This reward may be delivered to multi-agents 210, 220, 230 and used by the agents to perform reinforcement learning. That is, multi-agents 210, 220, 230 may learn using the same reward during reinforcement learning. However, it is also true that multi-agents may learn using different rewards.

In an embodiment, the reward 280 may be determined based on total revenue, facility operating costs, naphtha purchase costs, costs subject to constraints, etc. For example, the reward may be determined by [Mathematical Formula 1] below.

[Mathematical Formula 1]

$$Reward = Profit - \sum_{c \in Constraints} w_c \cdot Cost_c$$

In [Mathematical Formula 1], Constraints are constraints, $w_c$ is the weight per constraint, and $Cost_c$ may mean the cost per constraint. Accordingly, the more the constraint is violated, the larger the $Cost_c$ value may be. For example, if the constraint includes the stability of the paraffin component, that is, the condition that the paraffin component must be maintained to a certain extent, the change in the component of the paraffin stored in the mixing tank may be used as the variable c.

In addition, in [Equation 1], the profit may be calculated by deducting the expected production cost of marketable products from the expected earnings generated by selling the naphtha, taking into account the facility operating cost (e.g., energy usage cost) and the naphtha purchase cost. For example, the profit may be determined according to [Equation 2], which is the total revenue minus the facility operating cost and the naphtha purchase cost, as shown below.

[Mathematical Formula 2]

$$Profit = Revenue - Energy\ usage - Naphtha\ cost$$

In an embodiment, Revenue may be calculated as, for example, "CH4 Production * CH4 Product Price + PSA OFF GAS Production * PSA OFF GAS Price + RC2 Production * Ethane Product Price + C3LPG Production * Propane Product Price + Ethylene Production * C2 Product Price + Propylene Production * C3 Product Price + H2(99%) Production * 99% H2 Product Price + HRPG Production * HRPG Product Price + PFO Production * PFO Product Price + RawC5 Production * RawC5 Product Price + (Mixed C4 Production * Mixed C4 Product Price) + (RPG Production RawC5 Production) * RPG Product Price."

In an embodiment, Energy usage may be calculated as, for example, "[(Naphtha input + C3LPG input + C4LPG input) * A + Mixed C4 production * B + (RPG production + RawC5 production) * C] * C3LPG price / C3LPG calorific value / 1000", where A may be the average energy intensity of a naphtha cracking center plant, B may be the average energy intensity of a BD plant, and C may be the average energy intensity of a BTX plant (e.g., a plant that produces aromatic products using pyrolysis gasoline produced in an ethylene plant as a raw material).

In an embodiment, hh may be calculated as "Total Naphtha Feed Input * Naphtha Price + C3 LPG Input * C3 LPG Price + C4 LPG Input * C4 LPG Price + RC2 Input * Ethane Product Price".

In an embodiment, when the optimal scheduling is determined through such reinforcement learning, the naphtha cracking center may be operated according to the generated optimal scheduling. For example, when multiple schedules are formed and provided to the user, the user may operate the naphtha cracking center based on one of them.

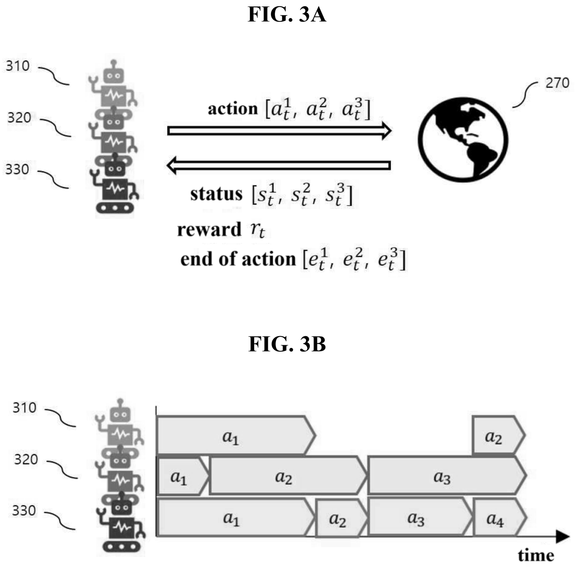

FIG. 3A and FIG. 3B are diagrams illustrating a reinforcement learning method using multi-agents according to an embodiment of the present disclosure.

Referring to FIG. 3A, an asynchronous multi-agent system is illustrated in which the start and duration times of actions of each agent are different. For example, if the multi-agents are composed of three first agents 310, second agents 320, and third agents 330 as in FIG. 3A, each of the agents may determine on different actions at different times, the determined action vector $[a_t^1,\ a_t^2, a_t^3]$ may be transmitted to the environment 340, and a changed status vector $[s_t^1,\ s_t^2, s_t^3]$ may be determined as a result of applying the actions to the environment 340. In addition, an action end vector $[e_t^1,\ e_t^2, e_t^3]$ may be provided to the agents. In addition, a reward $r_t$ generated as a result of applying the actions to the environment 340 may be provided to each agent. The actions of each agent may be determined asynchronously as in FIG. 3B.

In another embodiment, the actions of each agent may be transmitted to the environment 340 each time the action is determined. For example, at the first time point when the first agent 310 determines the first action, the first action is reflected in the environment 340, at the second time point when the second agent 310 determines the second action, the second action is reflected in the environment 340, and at the third time point when the second agent 310 determines the third action, the third action is reflected in the environment 340, and so on. Each action may be reflected in the environment 340. However, since the reward is determined only when the product is ultimately produced and sold, the reward may be determined and provided to each agent after the actions of the first agent 310, the second agent 320, and the third agent 330 are all reflected in the environment 340.

In an embodiment, the status, action, and reward of each agent may include the following information:

1. First agent

- Status: naphtha incoming schedule (e.g. vessel schedule or incoming plan from another company), current status of incoming tanks (e.g. naphtha stock and properties per tank), constraints related to incoming tanks.
- Action: identifier of the incoming tank for storing naphtha at the time of incoming of naphtha, the amount of naphtha to be stored in that incoming tank, or the pipe connection schedule (e.g., pipe connection to vessel A from 2:00 PM to 10:00 PM for incoming tank No. 1).
- Reward: earnings considering whether constraints are satisfied

2. Second agent

- Status: inventory and properties of each incoming tank, stock and properties of the mixing tank
- Action: identifier of the incoming tank that will hold at least some naphtha in the mixing tank, the quantity of naphtha to be taken from that incoming tank to the mixing tank, or the pipe connection schedule (e.g., pipe from incoming tank 1 to mixing tank from 8:00 AM to 2:00 PM).
- Reward: earnings considering whether constraints are satisfied

3. Third agent

- Status: inventory and properties of mixing tanks, operation state by each cracking furnace
- Action: feed rate, COT, DS ratio, etc. of naphtha from the mixing tank to each cracker.
- Reward: earnings considering whether constraints are satisfied

However, this is only an example, and it is obvious that the status, action, and reward of each agent may be adjusted differently.

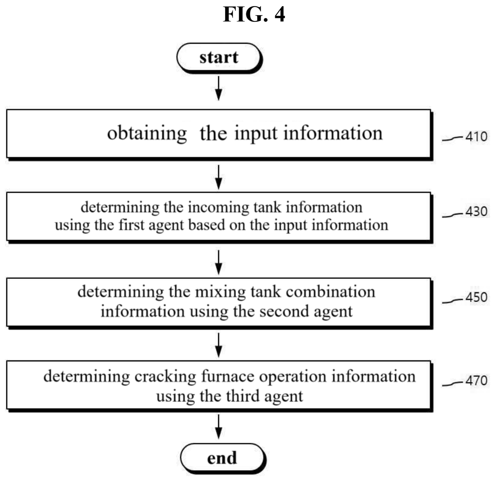

FIG. 4 is a flowchart illustrating a method for generating scheduling information according to an embodiment of the present disclosure.

Referring to FIG. 4, at operation 410, the naphtha cracking center scheduling system may obtain input information. For example, the input information may be obtained through user input based on a user interface (UI).

In an embodiment, the input information may include constraints, naphtha incoming schedule information, tank inventory information, naphtha property information in the tank, mixing tank operation information, cracking furnace operation plan information, target production volume information for specific products, raw material unit price information, product unit price information, etc. In another embodiment, some of the constraints, etc. may be preset information, and in that case, may not be included in the input information because they are preset.

In an embodiment, the constraints may include physical constraints such as tank storage capacity criteria that must be satisfied, the number of pipes that may be connected at one time, stability constraints regarding stability, operational constraints to meet a set target production volume for a specific period of time (e.g., weekly or monthly), etc. In addition, the naphtha incoming schedule information may include a vessel incoming schedule, information on other company's tanks, naphtha incoming schedules for a specific period of time in the future, expected incoming date and time, incoming speed, incoming amount, naphtha property information, and identification information according to naphtha incoming method (e.g., vessel identifier, other company's tank identifier, company-specific pipe identifier, etc.).

In an embodiment, at least one of the input information may include information for a specific period of time or information at a specific point in time. For example, each of the tank inventory information and the tank naphtha composition information may include naphtha inventory information for the corresponding tank at the start of the scheduling and naphtha composition information for the corresponding tank at the start of the scheduling.

In an embodiment, the mixing tank operation information may include one or more mixing schedules, including a mixing start time, a mixing end time, the names of the incoming tanks to be blended, and a mixing speed for each mixing incoming tank. For example, the mixing schedule may include a recent mixing schedule.

In an embodiment, the cracking furnace operation plan information may include schedule information by cracking furnace for a predetermined period in the future. For example, the cracking furnace operation plan information may include schedule information determined for each cracking furnace for the next 30 days. In an embodiment, cracking furnaces may exist in various types. For example, if there are different types of cracking furnaces, a first cracking furnace, a second cracking furnace, and a third cracking furnace, the cracking furnace operation plan information may include schedule information determined for each of the first cracking furnace, the second cracking furnace, and the third cracking furnace for the next 30 days. The cracking furnace operation plan information may include a cracking start time, a cracking end time, an operation mode (or feed mode), decoking schedule information, coil outlet temperature (COT), coil outlet pressure, a predetermined speed (e.g., feed rate), dilution steam (DS) ratio, etc.

In an embodiment, the target production volume information for a specific product may include a target production volume or rate for a specific product over a specific period of time in the future. For example, the target production volume information for a specific product may include a target daily production volume for ethylene over the next 30 days, a target daily production volume for propylene over the next 30 days, etc.

In an embodiment, the raw material unit price information may include raw material unit price information at the time of information input, raw material unit price information for a specific period prior to the time of information input, and expected raw material unit price information for a specific period after the time of information input. For example, the raw material unit price information may include the expected daily price of the raw material for the next 30 days.

In an embodiment, the product unit price information may include unit price information at the time of inputting information for each product, unit price information for a specific period prior to the time of inputting information for each product, and expected unit price information for a specific period after the time of inputting information for each product. For example, the product unit price information may include the expected price of daily naphtha products for the next 30 days.

However, the above input information is only an example and is not limited thereto, and various input information for scheduling the naphtha cracking center may be included.

In operation 430, the naphtha cracking center scheduling system may determine the incoming tank information using the first agent based on the input information. In an embodiment, the first agent may be an agent trained using reinforcement learning. The first agent may determine an incoming tank to income naphtha from at least one of the vessel and the tanks of the other company based on input information including a ship incoming schedule, a naphtha incoming schedule from another company, real-time incoming tank inventory, naphtha properties information in the tank, cracking furnace operation plan information, etc., and may determine the amount, ratio, or schedule information of naphtha to be stored in the corresponding incoming tank. For example, the first agent may determine an identifier of at least one incoming tank to store naphtha among a plurality of incoming tanks based on the input information, and determine naphtha incoming ratio or amount information for each tank corresponding to each identifier.

In addition, the first agent may determine naphtha incoming schedule information, period information for storing naphtha in the corresponding incoming tank, etc. for each tank corresponding to each identifier based on the input information. The incoming schedule information may include date or time information for connecting a vessel or other company's apparatus and an incoming tank via a pipe (e.g., naphtha incoming from vessel B to incoming tank A from 2:00 PM to 6:00 PM). In an embodiment, a pipe may be connected by transferring naphtha from a vessel or other company's apparatus to an incoming tank, but since pipe connection, etc. are inconvenient for humans to perform frequently when the schedule changes, there may be constraints such as a minimum n-hour connection per pipe. The first agent may determine the incoming tank information by considering these constraints.

In an embodiment, the naphtha cracking center scheduling system may obtain naphtha properties information corresponding to each incoming tank after a predetermined amount of naphtha has been distributed to the incoming tank.

In an embodiment, all the incoming tank information may be determined using one first agent, or the incoming tank information may be determined using a different first agent for each incoming tank, or the incoming tank information may be determined using a different first agent for each group of incoming tanks. That is, there may be more than one first agent.

In operation 450, the naphtha cracking center scheduling system may determine the mixing tank combination information using a second agent. In an embodiment, the second agent may be an agent trained using chemical learning. The second agent may determine the mixing tank combination information based on the inventory of each incoming tank, the properties of the naphtha stored in each incoming tank, etc.

In an embodiment, the mixing tank combination information may include an identifier of at least one incoming tank from among a plurality of incoming tanks to transfer naphtha to the mixing tank, information on a ratio (or amount) of naphtha to be transferred to the mixing tank for each identifier of the at least one incoming tank, information on a mixing schedule with the mixing tank for each of the at least one incoming tank, information on a naphtha mixing ratio for each of the at least one incoming tank, information on a blending performance date, etc. The naphtha mixing ratio information may include information on a ratio or amount of naphtha to be taken from each incoming tank, etc.

In an embodiment, all mixed tank combination information may be determined using one second agent, or the incoming tank information may be determined using a different second agent for each mixed tank, or the incoming tank information may be determined using a different second agent for each group of mixed tanks. That is, there may be more than one second agent.

In operation 470, the naphtha cracking center scheduling system may determine cracking furnace operation information using a third agent. In an embodiment, the third agent may be an agent learned using reinforcement learning. The third agent may determine cracking furnace operation information based on the inventory information of the mixing tank, the property information of the mixing tank, the cracking furnace status information, etc. In an embodiment, the cracking furnace operation information may include cracking furnace mode information, a cracking furnace identifier, a feed rate, a COT (Coil Outlet Temperature), a DSR (Dilution Steam Ratio), a heating time, cracking furnace operation schedule information, one or more variables for cracking furnace operation, etc.

In an embodiment, the third agent may be multiple. For example, different agents may be used for each cracking furnace mode. For example, the third agent may include a 3-1 agent that has been reinforced-learned for the cracking furnace in mode of A, a 3-2 agent that has been reinforced-learned for the cracking furnace in mode of B, and a 3-3 agent that has been reinforced-learned for the cracking furnace in mode of C, and the naphtha cracking center scheduling system may determine the cracking furnace operation information of the A mode using the 3-1 agent for the cracking furnace in mode of A, determine the cracking furnace operation information of the B mode using the 3-2 agent for the cracking furnace in mode of B, and determine the cracking furnace operation information of the C mode using the 3-3 agent for the cracking furnace in mode of C. In another embodiment, one third agent may determine all cracking furnace operation information.

In an embodiment, the naphtha cracking center scheduling system may determine one or more scheduling information of the naphtha cracking center based on the incoming tank information generated by the first agent, the mixing tank combination information generated by the second agent, and the cracking furnace operation information generated by the third agent. In an embodiment, the scheduling information may include incoming scheduling information, mixing scheduling information, cracking furnace scheduling information, expected production volume information, expected earnings information, expected naphtha inventory information, expected properties information, constraint satisfaction test result information, scheduling graph, etc.

In an embodiment, the incoming scheduling information may include incoming schedule information for a predetermined period of time in the future. For example, the incoming scheduling information may include information on the identification of a tank to be incomed for the next two weeks, the start time of incoming for that incoming tank, and the end time of incoming for that incoming tank.

In an embodiment, the mixing scheduling information may include mixing schedule information for a predetermined period of time in the future. For example, the mixing scheduling information may include information on the identification of a mixing tank to be used for the next two weeks, mixing start time of the mixing tank, mixing end time of the mixing tank, mixing speed information of the tank (e.g., mixing speed of Tank A: approximately 100 Ton/hour), etc.

In an embodiment, the cracking furnace scheduling information may include schedule information by cracking furnace for a predetermined period of time in the future. For example, the cracking furnace scheduling information may include identification information for the cracking furnace to be used for the next two weeks, cracking start time for that cracking furnace, cracking end time for that cracking furnace, cracking speed (e.g., target control speed determined through artificial intelligence, feed rate, etc.), COT, DS ratio, etc.

In an embodiment, the expected production volume information, expected earnings information, expected naphtha inventory information, expected properties information, etc. may also be expected information for a predetermined period in the future. For example, the expected production volume information may include expected daily production provided by product for the next two weeks. In addition, the expected naphtha inventory information may include information on naphtha inventory or naphtha change provided by tank for the next two weeks, and the expected properties information may include information on properties change provided by tank for the next two weeks.

In an embodiment, the constraint satisfaction test result information may include evaluation information on how well the generated schedule satisfies predetermined constraints.

Furthermore, the naphtha cracking center scheduling system may provide one or more scheduling information to the user through the UI/UX. For example, an overview of each of the one or more scheduling information may be provided in the form of a graph or picture through the UI/UX, and summary information such as cumulative profit, constraint satisfaction, etc. may also be provided.

According to an embodiment of the present disclosure, a naphtha cracking center scheduling system may determine scheduling information of a naphtha cracking center using an asynchronous multi-agent system including a first agent, a second agent, and a third agent. For example, each agent may determine different information at different times.

Meanwhile, although FIG. 4 illustrates a schedule generation method according to an embodiment of the present disclosure, it is to be understood that various modifications may be made to FIG. 4. For example, although FIG. 4 illustrates sequential operations, it is to be understood that various operations in FIG. 24 may overlap, may be performed in parallel, may be performed in a different order, or some operations may be performed repeatedly multiple times.

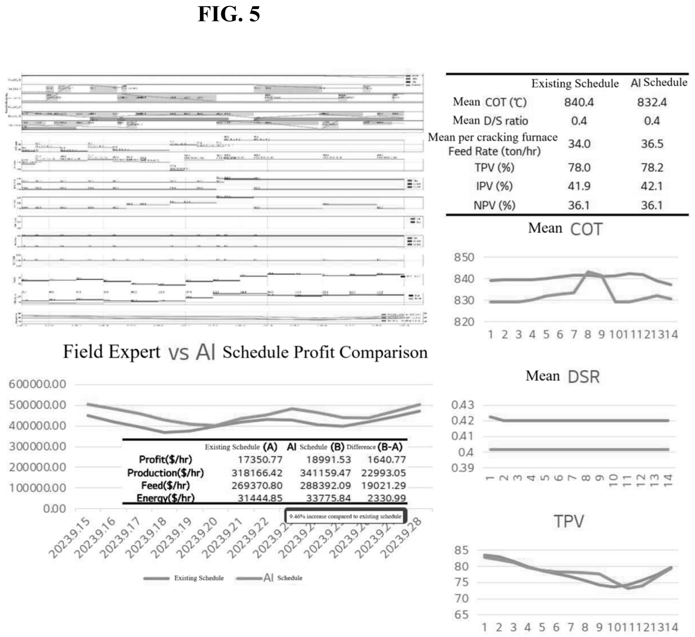

FIG. 5 is a drawing showing an effect according to an embodiment of the present disclosure.

Referring to FIG. 5, it may be seen that when artificial intelligence through reinforcement learning according to an embodiment of the present disclosure schedules a naphtha cracking facility, the profit increases by about 9.46% compared to when a field expert decides. According to an embodiment of the present disclosure, profits may be maximized by artificial intelligence generating an optimal schedule.

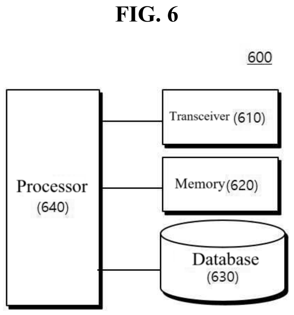

FIG. 6 is a block diagram of a system according to an embodiment of the present disclosure.

Referring to FIG. 6, the naphtha cracking center scheduling apparatus 600 (the apparatus may also be referred to as a server or a system) may include a transceiver 610, a memory 620, a database 630, and a processor 640. However, not all of the components illustrated in FIG. 6 are essential components of the naphtha cracking center scheduling apparatus 600. The naphtha cracking center scheduling apparatus 600 may be implemented with more components than the components illustrated in FIG. 6, or the naphtha cracking center scheduling apparatus 600 may be implemented with fewer components than the components illustrated in FIG. 6. In addition, the transceiver 610, the memory 620, and the processor 640 may be implemented in the form of a one chip.

In an embodiment, the transceiver 610 may communicate with a terminal or other electronic apparatus connected to the naphtha cracking center scheduling apparatus 600 by wire or wirelessly. For example, the transceiver 610 may income input information from a user terminal. In an embodiment, the input information may include naphtha incoming plan information, production target amount for each product (e.g., ethylene production target amount), constraints, status information, scheduling start time, etc. The naphtha incoming plan information may include expected incoming time, incoming speed, incoming amount, naphtha properties information, incoming type information (e.g., whether it is a vessel or a tank of another company), etc. The status information may include a predetermined mixing schedule, a predetermined cracking schedule, etc. The mixing schedule or cracking schedule may include a start time, an end time, a tank name, a mixing or cracking speed for each tank, and the cracking schedule may further include various variable information such as pressure and temperature information. In addition, status information may include tank-by-tank naphtha inventory and properties at the start of scheduling.

Various types of data, such as programs and files, such as applications, may be installed and stored in the memory 620. The processor 640 may access and use data stored in the memory 620, or store new data in the memory 620. In addition, the memory 620 may store one or more instructions. The processor 640 may execute one or more instructions stored in the memory.

The processor 640 controls the overall operation of the naphtha cracking center scheduling apparatus 600 and may include at least one processor, such as a CPU, a GPU, etc. The processor 640 may control other components included in the naphtha cracking center scheduling apparatus 600 to perform operations for operating the naphtha cracking center scheduling apparatus 600. For example, the processor 640 may determine the incoming tank information using the first agent, determine the mixing tank combination information using the second agent, and determine the cracking operation information using the third agent based on the input information.

In an embodiment, the processor 640 may generate one or more scheduling information of the naphtha cracking center based on the incoming tank information, the mixing tank combination information, and the cracking operation information. In addition, the transceiver 610 may transmit the scheduling information to the user terminal so that the corresponding scheduling information is output through the display of the user terminal. In an embodiment, the output scheduling information may include an incoming schedule for a predetermined period in the future (e.g., incoming start and end times, incoming tank identifiers, etc.), a mixing schedule for a predetermined period in the future (e.g., mixing start and end times, mixing tank identifiers, mixing speeds, etc.), a cracking schedule for a predetermined period in the future (e.g., cracking start and end times, feed rate determined through an algorithm, COT, DS ratio, etc.), daily product-by-product production and expected profit information for a predetermined period in the future, naphtha inventory and property change information for a predetermined period in the future, constraint inspection result information for the generated schedule, a plot visualizing the generated schedule, etc.

The process of generating and outputting scheduling information in this way may be performed through the UI/UX of the user terminal. For example, when the processor 640 obtains input information input by the user, it verifies whether the input information contains enough data to generate output data, and if it is determined that the input information is valid, it may generate one or more scheduling information using an artificial intelligence scheduler based on the scheduling start date input by the user. In addition, the processor 640 may provide information by graphing one or more scheduling information, and the user terminal may display this information in the form of UI/UX.

The database 630 may store various learning data for learning the learning model. In addition, the database 630 may store material information, phase information, simulation result information, etc., and in various embodiments, output data output by the learning model may be stored. In FIG. 6, the naphtha cracking center scheduling apparatus 600 is illustrated as including the database 630, but the database 630 may be provided outside the apparatus. In this case, the database 630 may be connected to the naphtha cracking center scheduling apparatus 600 wired/wirelessly.

In addition, the learning model may be implemented outside the naphtha cracking center scheduling apparatus 600 (e.g., cloud-based) or may be included within the naphtha cracking center scheduling apparatus 600.

An embodiment of the present disclosure may also be implemented in the form of a recording medium containing computer-executable instructions, such as program modules, that are executed by a computer. Computer-readable media may be any available media that may be accessed by a computer, and include both volatile and nonvolatile media, removable and non-removable media. Computer-readable media may also include both computer storage media and communication media. Computer storage media includes both volatiles and non-volatiles, removable and non-removable media implemented in any method or technology for storage of information, such as computer-readable instructions, data structures, program modules, or other data. Communication media typically includes computer-readable instructions, data structures, or program modules, and includes any information delivery media.

The above-described description of the present disclosure is for illustrative purposes, and those skilled in the art will understand that the present disclosure may be easily modified into other specific forms without changing the technical idea or essential features of the present invention. Therefore, it should be understood that the embodiments described above are exemplary in all respects and not limiting. For example, each component described in a singular form may be implemented in a distributed manner, and likewise, components described as distributed may be implemented in a combined manner.

The scope of the present disclosure is indicated by the claims described later rather than the detailed description above, and all changes or modifications derived from the meaning and scope of the claims and their equivalent concepts should be interpreted as being included in the scope of the present disclosure.

**Claims**

1. A method for scheduling a naphtha cracking center by at least one processor, comprising:

   obtaining input information;
   determining incoming tank information using a first agent based on the input information;
   determining mixing tank combination information using a second agent; and
   determining cracking furnace operation information using a third agent,
   wherein at least one of the first agent, the second agent, and the third agent is learned by reinforcement learning.

2. The method of claim 1, wherein:
   the first agent, the second agent, and the third agent are asynchronous multi-agents.

3. The method of claim 1, wherein:
   the input information comprises at least one of constraints, naphtha incoming schedule information, tank inventory information, naphtha property information in the tanks, mixing tank operation information, cracking furnace operation plan information, target production quantity information for specific products, raw material unit price information, and product unit price information.

4. The method of claim 1, wherein:
   the method comprises generating one or more scheduling information for the naphtha cracking center based on the incoming tank information, the mixing tank combination information, and the cracking furnace operation information.

5. The method of claim 4, wherein:

   the input information is obtained through a first user interface (UI), and
   the scheduling information is provided to the user through a second UI.

6. The method of claim 4, wherein:
   the scheduling information comprises at least one of incoming scheduling information, mixing scheduling information, cracking furnace scheduling information, expected production quantity information, expected earnings information, expected naphtha inventory information, expected property information, constraints satisfaction test results, and a scheduling graph.

7. The method of claim 1, wherein:
   the incoming tank information comprises at least one of:
   an identifier of at least one incoming tank for storing naphtha among a plurality of incoming tanks, naphtha incoming ratio information for each of the at least one incoming tank, and naphtha incoming schedule information for each of the at least one incoming tank.

8. The method of claim 1, wherein:
the mixing tank combination information comprises determining at least one of:
an identifier of at least one incoming tank from among a plurality of incoming tanks from which naphtha is transferred to the mixing tank, information on the ratio of naphtha to be transferred to the mixing tank for each of identifier of the at least one incoming tanks, information on the mixing schedule with the mixing tank for each of the at least one incoming tanks, information on the ratio of naphtha mixing for each of the at least one incoming tanks, and information on the blending performance date.

9. The method of claim 1, wherein:
the cracking furnace operation information comprises at least one of:
cracking furnace mode information, cracking furnace identifier, input rate, coil outlet temperature (COT), dilution steam ratio (DSR), heating time, and cracking furnace operation schedule information.

10. The method of claim 1, wherein:
at least one of the first agent, the second agent, and the third agent is a plurality.

11. The method of claim 1, wherein:
the first agent, the second agent, and the third agent are **characterized by** learning using the same reward in reinforcement learning.

12. The method of claim 11, wherein:
the reward in the reinforcement learning is determined based on total earnings, facility operation costs, naphtha purchase costs, and costs associated with constraints.

13. The method of claim 11, wherein:

the reward in the reinforcement learning is determined by the following:

$$Reward = Profit - \sum_{c \in Constraints} w_c \cdot Cost_c,$$

$$Profit = Revenue - Energy\ usage - Naphtha\ cost$$

wherein the profit is determined based on subtracting facility operation costs and naphtha purchase costs from the total earnings,
$w_c$ is the weight per each constraint and $Cost_c$ is the cost per each constraint.

14. A system comprising:

one or more processors; and
one or more memory having stored therein computer-readable instruction configured to cause one or more processors to perform the method of any one of claims 1 to 13.

15. A program stored on a computer-readable recording medium that causes a computer to execute any one of the methods of claims 1 to 13.

**FIG. 1**

FIG. 2

Generated Schedule

Incoming Agent 210

Mixing Agent 220

cracking Agent 230

240

250

260

virtual naphtha operating environment 270

Reinforcement learning Agent-Environment Interaction 280

Vessel/tank/cracking furnace state change and earnings

End of mock operation

5401-FA

Generated final operation

EP 4 679 341 A1

14

**FIG. 3A**

**FIG. 3B**

**FIG. 4**

```
                    ┌─────────┐
                    │  start  │
                    └────┬────┘
                         ↓
┌───────────────────────────────────────────────┐
│        obtaining  the input information        │────410
└────────────────────────┬──────────────────────┘
                         ↓
┌───────────────────────────────────────────────┐
│      determining the incoming tank information │────430
│   using the first agent based on the input information │
└────────────────────────┬──────────────────────┘
                         ↓
┌───────────────────────────────────────────────┐
│       determining the mixing tank combination  │────450
│        information using the second agent       │
└────────────────────────┬──────────────────────┘
                         ↓
┌───────────────────────────────────────────────┐
│  determining cracking furnace operation information │────470
│            using the third agent                │
└────────────────────────┬──────────────────────┘
                         ↓
                    ┌─────────┐
                    │   end   │
                    └─────────┘
```

# FIG. 5

| | Existing Schedule | AI Schedule |
|---|---|---|
| Mean COT (°C) | 840.4 | 832.4 |
| Mean D/S ratio | 0.4 | 0.4 |
| Mean per cracking furnace Feed Rate (ton/hr) | 34.0 | 36.5 |
| TPV (%) | 78.0 | 78.2 |
| IPV (%) | 41.9 | 42.1 |
| NPV (%) | 36.1 | 36.1 |

Mean COT

Mean DSR

TPV

Field Expert vs AI Schedule Profit Comparison

| | Existing Schedule (A) | AI Schedule (B) | Difference (B-A) |
|---|---|---|---|
| Profit($/hr) | 17350.77 | 18991.53 | 1640.77 |
| Production($/hr) | 318166.42 | 341159.47 | 22993.05 |
| Feed($/hr) | 269370.80 | 288392.09 | 19021.29 |
| Energy($/hr) | 31444.85 | 33775.84 | 2330.99 |

9.46% increase compared to existing schedule

Existing Schedule    AI Schedule

EP 4 679 341 A1

# FIG. 6

<u>600</u>

Transceiver (610)

Memory(620)

Processor
(640)

Database
(630)

## INTERNATIONAL SEARCH REPORT

| International application No. |
|---|
| **PCT/KR2024/013412** |

### A. CLASSIFICATION OF SUBJECT MATTER

**G06Q 10/06**(2012.01)i; **G06Q 10/04**(2012.01)i; **G06Q 10/10**(2012.01)i; **G06Q 10/08**(2012.01)i; **G06Q 10/30**(2023.01)i; **G06N 20/00**(2019.01)i; **G06N 3/092**(2023.01)i; **C10G 35/00**(2006.01)i

According to International Patent Classification (IPC) or to both national classification and IPC

### B. FIELDS SEARCHED

Minimum documentation searched (classification system followed by classification symbols)

G06Q 10/06(2012.01); C10G 7/12(2006.01); C10G 9/00(2006.01); F17D 1/12(2006.01); F17D 3/03(2006.01); G06F 30/27(2020.01); G06N 3/092(2023.01); G06Q 10/04(2012.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 나프타 분해(naphtha cracking), 스케줄링(scheduling), 에이전트(agent), 강화 학습(reinforcement learning)

### C. DOCUMENTS CONSIDERED TO BE RELEVANT

| Category* | Citation of document, with indication, where appropriate, of the relevant passages | Relevant to claim No. |
|---|---|---|
| A | KR 10-2021-0076132 A (DOW GLOBAL TECHNOLOGIES LLC) 23 June 2021 (2021-06-23) See paragraphs [0022], [0040], [0159] and [0197], claims 1-3 and figure 7. | 1-15 |
| A | KR 10-2011-0126984 A (LG CHEM, LTD.) 24 November 2011 (2011-11-24) See paragraph [0024], claim 1 and figure 2. | 1-15 |
| A | KR 10-2015-0005004 A (LG CHEM, LTD.) 14 January 2015 (2015-01-14) See claims 1-4. | 1-15 |
| A | KR 10-2022-0046905 A (INCHEON NATIONAL UNIVERSITY RESEARCH & BUSINESS FOUNDATION) 15 April 2022 (2022-04-15) See paragraph [0184]. | 1-15 |
| A | CN 116542137 A (GUIZHOU POWER GRID CO., LTD.) 04 August 2023 (2023-08-04) See claims 1 and 2. | 1-15 |

✓ Further documents are listed in the continuation of Box C.    ✓ See patent family annex.

| | |
|---|---|
| \*   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **09 December 2024** | **09 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/013412** |

| C. | DOCUMENTS CONSIDERED TO BE RELEVANT | |
| --- | --- | --- |
| Category* | Citation of document, with indication, where appropriate, of the relevant passages | Relevant to claim No. |
| X | 주식회사 엔지경영개발원. 강화학습을 활용한 납사 분해 시설 자동화. 2023 디지털 미래혁신대전. 25 September 2023, non-official translation (LG MANAGEMENT DEVELOPMENT INSTITUTE. Automation of Naphtha Cracking Facilities Using Reinforcement Learning. Future Tech Conference 2023). [online]. [Retrieved on 02 December 2024]. <br> See entire document. <br> * This document is a document declaring `exceptions to lack of novelty` by the applicant. | 1-15 |

Form PCT/ISA/210 (second sheet) (July 2022)

**INTERNATIONAL SEARCH REPORT**
Information on patent family members

International application No.

**PCT/KR2024/013412**

| Patent document cited in search report | | | Publication date (day/month/year) | Patent family member(s) | | | Publication date (day/month/year) |
|---|---|---|---|---|---|---|---|
| KR | 10-2021-0076132 | A | 23 June 2021 | AU | 2019-364195 | A1 | 27 May 2021 |
| | | | | BR | 112021007884 | A2 | 03 August 2021 |
| | | | | CA | 3116855 | A1 | 30 April 2020 |
| | | | | CL | 2021001033 | A1 | 01 October 2021 |
| | | | | CN | 113099729 | A | 09 July 2021 |
| | | | | CN | 113099729 | B | 28 May 2024 |
| | | | | CO | 2021006650 | A2 | 09 August 2021 |
| | | | | EP | 3871166 | A1 | 01 September 2021 |
| | | | | JP | 2022-505434 | A | 14 January 2022 |
| | | | | JP | 7531486 | B2 | 09 August 2024 |
| | | | | MX | 2021004619 | A | 07 July 2021 |
| | | | | SG | 11202104066 | A | 28 May 2021 |
| | | | | US | 2022-0027817 | A1 | 27 January 2022 |
| | | | | WO | 2020-086214 | A1 | 30 April 2020 |
| KR | 10-2011-0126984 | A | 24 November 2011 | KR | 10-1189500 | B1 | 11 October 2012 |
| KR | 10-2015-0005004 | A | 14 January 2015 | KR | 10-1750588 | B1 | 23 June 2017 |
| KR | 10-2022-0046905 | A | 15 April 2022 | None | | | |
| CN | 116542137 | A | 04 August 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 102181879